(19) Europäisches Patentamt
European Patent Office
Office européen des brevets

(11) **EP 4 624 534 A1**

(12) **EUROPEAN PATENT APPLICATION**

(43) Date of publication:
**01.10.2025 Bulletin 2025/40**

(21) Application number: 24166389.7

(22) Date of filing: **26.03.2024**

(51) International Patent Classification (IPC):
*C09D 5/00* *(2006.01)*

(52) Cooperative Patent Classification (CPC):
**C09D 5/00; C08L 89/005; C08L 93/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bioventia AB
195 60 Arlandastad (SE)**

(72) Inventors:
• **KUZNIAK, Tomasz
194 57 UPPLANDS VÄSBY (SE)**
• **KRONBERG, Bengt
756 51 UPPSALA (SE)**
• **ZOFFMANN, Markus
193 31 SIGTUNA (SE)**

(74) Representative: **Brann AB
P.O. Box 3690
Sveavägen 63
103 59 Stockholm (SE)**

(54) **SHELLACK BASED BINDER**

(57) A composition comprising an aqueous solution, shellac and an emulsifier; wherein the emulsifier is selected from casein, an amphiphilic component or a combination thereof; and wherein the amount of the emulsifier is at least 10wt% based on the amount of shellack but less than 30wt%.

EP 4 624 534 A1

**Description**

FIELD OF INVENTION

The present invention relates to a composition that can be used as a binder in paint. The composition is an aqueous composition comprising schellac and an emulsifier.

BACKGROUND

A binder of paint normally contains latex particles of e.g. acrylates, alkyds or polyurethanes dispersed in water. The softening temperature, Tg, (also termed glass transition temperature) of these latexes is normally high (over room temperature) in order to have a final coating that is hard and non-tacky.

When applying such a dispersion on a surface the water evaporates and the particles close pack. However, a problem is that the adhesion between the particles is not sufficient to form a steady film. In order to address this problem a softener, or coalescing agent, may be added. As the water evaporates the coalescing agent concentration increases and enters the latex particles. The effect is that the latex particles deform and eventually the particles coalesce and lose their identity.

In this manner a continuous film, holding the paint pigments, is formed. As the film continues to dry the coalescing agent evaporates leaving a hard paint surface. This process may take months, depending on the vapor pressure of the coalescing agent and the surrounding environment. Presence of coalescing agents in paints may result in high levels of VOC, Volatile Organic Compounds, which may be harmful or toxic.

Shellac or lacca is a resin produced by lac bugs and contains mainly aleuritic acid, jalaric acid, schelloilic acid and other waxes. The natural schellac is purified to remove unwanted products. Today schellac is used in a variety of application ranging from furniture polish to nail polish, to coating of sweets.

A problem with shellac-based composition is that the formed film is brittle and cracks and the compositions have a tendency of not being stable over time.

Casein is a protein that has good adhesive properties but films of casein has a long drying time and the formed film is brittle and not water resistant. Casein also has a tendency to react with the underlying surface. Further, casein is unstable when dissolved.

SUMMARY OF INVENTION

The aim of the present invention is to overcome the drawbacks of prior art and provide a biobased binder composition which has low level of VOC and is stable, and when applied provides a film, coating or layer which adheres well to the surface, and has a reduced tendency to crack and discolour.

In a first aspect the present invention relates to a composition comprising water, shellac and an emulsifier; wherein the emulsifier is an amphiphilic component; and wherein the amount of the emulsifier is at least 10wt% based on the amount of shellack but less than 30wt%.

In a second aspect the present invention relates to a method of preparing the composition according to the present invention wherein the method comprises:

a. Preparing an emulsifier solution by dissolving the emulsifier in a first aqueous solution at an emulsifier dissolving temperature, with proviso that the pH of the emulsifier solution is at least 8 when the emulsifier is casein,
b. Preparing a shellack solution by dissolving shellack in a second aqueous solution at a shellack dissolving temperature and at a pH of at least 8; and
c. Mixing the emulsifier solution with the shellack solution.

In a third aspect the present invention relates to a composition obtainable by the method according to the present invention.

ITEMIZED EMBODIMENTS

In one embodiment according to any of the aspects the composition further particles of latex and wherein the latex preferably comprises carboxylic acid groups, hydroxyl groups or ester groups.

In one embodiment according to any of the aspects the latex is made of a polymer having a glass transition temperature of not higher than 25°C, more preferably not higher than 22°C.

In one embodiment according to any of the aspects the composition comprises a softener preferably selected from polypropylene glycol, polyethylene glycol, gelatine, glycerol, glycerol triacetate, triacetin or trimethyl citrate or a combination thereof.

In one embodiment according to any of the aspects the softener is selected from polypropylene glycol, polyethylene glycol or a combination thereof, wherein the molecular weight of the polypropylene glycol or the polyethylene glycol preferably is at least 100g/mol, more preferably at least 300g/mol but preferably lower than 1,000g/mol, more preferably lower than 700g/mol, more preferably the molecular weight is about 400g/mol.

In one embodiment according to any of the aspects the amount of softener is at least 10wt% based on the total amount of shellack and emulsifier, preferably at least 15wt% but preferably less than 30wt% more preferably less than 25wt%, more preferably the amount is about 25wt%.

In one embodiment according to any of the aspects the amount of schellac is at least 40wt% of the aqueous solution, preferably at least 45wt% but preferably not more than 60wt%, preferably not more than 55wt%.

In one embodiment according to any of the aspects the amount of the emulsifier is at least 15wt% but preferably less than 30wt% more preferably less than 25wt%, more preferably the amount is about 20wt% based on the amount of shellack.

In one embodiment according to any of the aspects the composition further comprises vegetable oil wherein the oil preferably comprises at least 60wt% of linoleic acid, preferably at least 70wt%, more preferably at least 80wt%, and preferably the oil comprises less than 10wt% of linolenic acid, preferably less than 5wt%, more preferably less than 1wt%.

In one embodiment according to any of the aspects the vegetable oil is thistle oil or safflower oil.

In one embodiment according to any of the aspects wherein the emulsifier is casein or a fatty acid based compound preferably based on triglyceride or a polyoxyethylene sorbitan preferably selected from polyoxyethylene sorbitan monooleate, polyoxyethylene sorbitan monolaurate, polyoxyethylene sorbitan monopalmitate, polyoxyethylene sorbitan monostearate, polyoxyethylene sorbitan dioleate and polyoxyethylene sorbitan trioleatee.

In one embodiment according to the present invention the composition has a pH of at least 8.

In one embodiment according to any of the aspects the emulsifier is casein or a combination of casein and a fatty acid based compound and wherein the pH of the emulsifier and/or the shellac solution is at least 8.2 and preferably adjusted using borax, bicarbonate, sodium hydroxide, ammoniac or ammonium hydroxide ($NH_4OH$).

In one embodiment according to any of the aspects the emulsifier dissolving temperature is 40-100°C, preferably 80-100°C when the emulsifier is casein or a combination of casein and a fatty acid based compound, or wherein the emulsifier dissolving temperature is lower than 40°C, preferably 20-30°C when the emulsifier is a fatty acid based compound.

In one embodiment according to any of the aspects the shellack dissolving temperature is 40-100°C, preferably 80-100°C.

In one embodiment according to any of the aspects an oil is added to the emulsifier solution.

In one embodiment according to any of the aspects an emulsifier selected from a fatty acid based compound and/or a softener is added to the shellac solution wherein the amphiphilic component.

In one embodiment according to any of the aspects latex particles are mixed with the schellac solution.

In one embodiment according to any of the aspects the aqueous solution is purified water preferably selected from deionized water or distilled water.

In one embodiment according to any of the aspects the water content in the aqueous solution is preferably at least 80wt%, more preferably at least 90wt%, more preferably at least 95wt%, more preferably about 100wt%.

All embodiments are applicable to all aspects and may be combined unless otherwise stated.

DETAILED DESCRIPTION

In the present invention the term "casein" encompasses $\alpha_{S1}$-casein, $\alpha_{S2}$-casein, $\beta$-casein and $\kappa$-kasein or a mixture of two or more thereof.

The composition

The composition according to the present invention is an aqueous composition comprising an aqueous solution, schellac and an emulsifier where the emulsifier is an amphiphilic component.

A problem seen when using an emulsifier such as casein is that the viscosity of the composition increases with time. What the present inventors found was that if the amount of the emulsifier to schellac is kept at a relative low amount this tendency is significantly reduced. Hence, an amount of the emulsifier is at least 10wt% but less than 30wt% based on the amount schellac has shown to reduce or even eliminate the increase in viscosity with time. Preferably the amount of emulsifier is at least 15wt% but preferably less than 25wt%, more preferably the amount is about 20wt%. The emulsifier of the present invention has the function of providing the wanted viscosity of the composition and to act as an emulsifier when the composition further comprises an oil. The emulsifier may be casein or a fatty acid based compound, or a combination thereof.

Casein is a protein that is an amphiphile and acts as an emulsifying agent in the composition especially when the composition comprises an oil. Casein has also good adhesion properties.

The fatty acid based compound includes triglyceride or fatty acid based amphiphilic compounds and polyoxyethylene sorbitan based compounds comprising fatty acids. Said fatty acid based compounds can form liposomes or vesicles and are used to stabilize the colloidal schellac structure especially when the composition comprises latex and/or pigment. Said fatty acid based compounds form liposomes where the schellac is partly found inside the liposomes and partly outside and thereby is partly protected. They may also act as a wetting agent and adsorbs on the particles and provides a more hydrophilic surface making the particles more water dispersible. By using a fatty acid based compound the renewable content of the composition increases. Any suitable polyoxyethyelene compound comprising a fatty acid may be used but is preferably selected from polyoxyethylene sorbitan monooleate, polyoxyethylene sorbitan monolaurate, polyoxyethylene sorbitan monopalmitate, polyoxyethylene sorbitan monostearate, polyoxyethylene sorbitan dioleate and polyoxyethylene sorbitan trioleate. A further advantage of using a polyoxyethylene sorbitan based compound is that they have a low $T_g$ which means that the amphiphilic compound also has a softening effect. What the present inventors found was that polyoxyethylene sorbitan dioleate and polyoxyethylene sorbitan trioleate provided better results. The present inventors have seen that a combination of casein and a fatty acid based compound provides high stability and good adhesion properties.

Shellack acts as a binder in the composition, and in the films or coatings. In order to provide good viscosity of the composition and the wanted properties of the obtained film or coating the content of shellack content in the composition is preferably at least 40wt% of the aqueous solution. In one embodiment the content is at least 45wt% but preferably not more than 60wt%, preferably not more than 55wt%. A further advantage of schellac is that it has biocide properties and has been shown even to be carbon dioxide negative footprint.

The aqueous solution is preferably water of any suitable purity but may comprise other solvents such as alcohol in minor amounts. Preferably the water is purified, preferably deionized or distilled. Using purified water increases the stability or and repeatability since tap water may contain components that may affect the compositions properties. The water content in the aqueous solution is preferably at least 80wt%, more preferably at least 90wt%, more preferably at least 95wt%, more preferably about 100wt%.

When the composition comprises particles of latex the latex preferably comprises carboxylic acid groups, hydroxyl groups or ester groups. Using latex comprising said functional groups allows reaction between hydroxyl groups on the schellac and the functional groups of the latex. By using a latex made of a polymer having a low glass transition temperature ($T_g$) the latex may provide a softening effect. In a preferred embodiment the latex is made of a polymer having a $T_g$ of not higher than 25°C, more preferably not higher than 22°C. This reduces the tendency for the formed film or coating to crack when dried and reduces the need for softeners.

Shellac and casein both have a rather high Tg, thus compensating the low softening temperature of the latex. In fact, it is possible to calculate the final softening temperature $T_{g,mix}$ through following equation:

$$\frac{1}{T_{g,mix}} = \frac{\varphi_1}{T_{g,1}} + \frac{1 - \varphi_2}{T_{g,2}}$$

Where $\varphi_{1i}$ and $T_{g,i}$ is the volume fraction and softening temperature of species i.

A softener may also be added to the composition to reduce the brittleness of the formed film or coating. Without being bound by theory but the softener dilutes the composition and reduces the number of cross-links or secondary bonds between the shellac molecules, or the shellac and the latex particles. Softener is preferably selected from polypropylene glycol, polyethylene glycol, gelatine, glycerol, glycerol triacetate, triacetin or trimethyl citrate or a combination thereof. Preferably the softener is polypropylene glycol or polyethylene glycol with a molecular weight of 100 to 1000g/mol. What the present inventors have shown is that a molecular weight of at least 300g/mol but lower than 700g/mol, more preferably the molecular weight is about 400g/mol shows the best results. The reason is that then the softener is large enough to interact and separate the interacting molecules while too large molecules tend not to be soluble in the schellac. Polypropylene glycol is not as water soluble as polyethylene glycol which would reduce the obtained film's or the coating's water sensibility. Further, polypropylene glycol has a higher vapour pressure, i.e. it evaporates more slowly, and thereby results in a low VOC value.

Depending on the wanted hardness and flexibility of the film the amount of softener is adjusted. The amount of softener is around 10 to 30wt% of the combined amount emulsifier and schellac, preferably 15-25wt%, more preferably around 20wt%.

By adding a vegetable oil to the composition the renewable content increases and makes the composition easier to use, for example the composition is more easily spread. The oil is preferably a drying or semi-drying oil. Linseed oil is a commonly used drying oil in paints but has the disadvantage of discoloration with time, forms acetaldehydes which evaporates and increases the VOC, and smell when the oxidation process is slow or not completed. The latter is a problem when using linseed oil based paints in areas where the circulation or the access to oxygen is limited for example indoors. Further, linseed oil may contain heavy metals as a residue from the drying process. Instead the present inventors have found that a preferred semi-drying oil is thistle oil or safflower oil. The vegetable oil according to the present invention should preferably comprise at least 60wt% of linoleic acid, preferably at least 70wt%, more preferably at least 80wt%, and preferably the oil comprises less than 10wt% of linolenic acid, preferably less than 5wt%, more preferably less than 1wt%. This provides sufficient drying time but does not discolour with time, no smell and the composition is easy to apply. When the composition comprises an oil the amount of emulsifier is preferably at least 20wt% of the amount of the oil in order to facilitate sufficient emulation of the oil. The amount is more preferably at least 25wt% but preferably less than 50wt%.

The present composition may further comprise filler and additives. Suitable fillers are kaolinite, quarts and mica. Additives may be biocides or preservatives.

The present composition which may be used as a binder composition provides films that are water resistant and can thereby be washed. A further advantage of the present invention is that the amount of renewable compounds in the composition may be high and may be easily adapted. When the composition does not comprise latex particles the amount of renewable compounds may be nearly 100wt% when measured as the amount of biobased carbon (C14), at least 80wt%, preferably at least 90wt%. Compositions comprising latex particles may have an amount of renewable compounds of up to 30wt%, such as 10-25wt%.

METHOD OF PREPARING COMPOSITION

When preparing the composition of the present invention at least two solutions are prepared, an emulsifier solution and a schellac solution. Emulsifier is dissolved in a first aqueous solution at an emulsifier dissolving temperature which preferably is 40-100°C, preferably 80-100°C when the emulsifier is casein. When the emulsifier is a fatty acid based compound the emulsifier dissolving temperature is lower than 40°C, preferably 20-30°C.

The pH of the emulsifier solution is at least 8 when the emulsifier is casein or a combination of casein and a fatty acid based compound. In a preferred embodiment the pH is at least 8.2 but preferably not higher than 9, preferably not higher than 8.5.

Schellac is dissolved in a second aqueous solution at a pH of at least 8 at a schellac dissolving temperature which preferably is 40-100°C, preferably 80-100°C, more preferably about 100°C. The pH of the schellac solution is preferably at least 8.2 but preferably not higher than 9, preferably not higher than 8.5. A problem with schellac is that it ages quite rapidly and is very hard to handle and to dissolve. Using a high temperature in combination with a high pH when preparing the schellac solution allows the use of aged schellac which otherwise would have been discarded.

The pH of the two aqueous solutions may be adjusted using any suitable base or alkali salt but preferably using borax, bicarbonate, sodium hydroxide, ammoniac or ammonium hydroxide ($NH_4OH$). Ammoniac and ammonium hydroxide are preferred since they do not form unwanted byproducts.

When using an oil in the composition said oil is preferably added to the emulsifier solution. The oil is added once the emulsifier is dissolved and is added during stirring. Softener is preferably added to the schellac solution. When the emulsifier is a combination of casein and a fatty acid based compound the emulsifier solution may comprise the casein and the fatty acid based compound may instead be added to the schellac solution.

The two solutions are then mixed at a suitable ratio during mixing to obtain the wated proportions of the components and the wanted viscosity. Any latex particles are preferably mixed with the formed mixture or with any one of the emulsifier or schellac solution.

EXAMPLES

Example 1

A composition comprising deionized water, schellac, casein and thistle oil was prepared according to the present invention.

The composition was analysed by Beta Analytic Inc. using C14 to determine the degree of biobased carbon.

The result showed that the composition had a 100% biobased carbon content.

Example 2

A study was performed to see the effect of using different emulsifiers and the effect of using purified water.

Five different compositions were prepared all comprising water, schellac and emulsifier (casein and/or Tween 85). Tween 85 is an amphiphilic component.

Composition 1: deionized water, schellac, casein, Tween 85 and thistle oil.

Composition 2: deionized water, schellac, casein, and thistle oil.

Composition 3: tap water, schellac, casein, Tween 85 and thistle oil.

Composition 4: deionized water, schellac, Tween 85 and thistle oil.

Composition 5: deionized water, schellac and Tween 85.

The compositions were applied to a glass surface and was visually analysed regarding appearance.

Results

When no amphiphilic component was used the obtained film was uneven and not homogenous.

When no oil or casein was used the obtained film was fully transparent.

Example 3

Two paint compositions were prepared using the composition according to the present invention where polypropylene glycol (400g/mol) was used as softener in one paint and polyethylene glycol (400g/mol) was used in the other.

A layer of paint was applied to a glass surface.

VOC Emission test was conducted by an external company (Eurofins Product Testing A/S).

Results

The tests showed that pain comprising polyethylene glycol had a much higher VOC (after 3 days and after 28 days) than the paint comprising polypropylene glycol.

**Claims**

1. A composition comprising an aqueous solution, shellac and an emulsifier;

　　wherein the emulsifier is an amphiphilic component; and
wherein the amount of the emulsifier is at least 10wt% based on the amount of shellack but less than 30wt%.

2. The composition according to claim 1 wherein the composition further particles of latex and wherein the latex preferably comprises carboxylic acid groups, hydroxyl groups or ester groups.

3. The composition according to claim 2 wherein the latex is made of a polymer having a glass transition temperature of not higher than 25°C, more preferably not higher than 22°C.

4. The composition according to any one of claim 1 to 3 wherein the composition comprises a softener preferably selected from polypropylene glycol, polyethylene glycol, gelatine, glycerol, glycerol triacetate, triacetin or trimethyl citrate or a combination thereof; and wherein the amount of softener preferably is at least 10wt% based on the total amount of shellack and emulsifier, preferably at least 15wt% but preferably less than 30wt% more preferably less than 25wt%, more preferably the amount is about 2 5wt%.

5. The composition according to any one of the preceding claims wherein the softener is selected from polypropylene glycol, polyethylene glycol or a combination thereof, wherein the molecular weight of the polypropylene glycol or the polyethylene glycol preferably is at least 100g/mol, more preferably at least 300g/mol but preferably lower than 1,000g/mol, more preferably lower than 700g/mol, more preferably the molecular weight is about 400g/mol.

6. The composition according to any one of the preceding claims wherein the amount of schellac is at least 40wt% of the aqueous solution, preferably at least 45wt% but preferably not more than 60wt%, preferably not more than 55wt%.

7. The composition according to any of the preceding claims wherein the amount of the emulsifier is at least 15wt% but preferably less than 30wt% more preferably less than 25wt%, more preferably the amount is about 20wt% based on the amount of shellack.

8. The composition according to any one of the preceding claims wherein the composition further comprises vegetable oil wherein the oil preferably comprises at least 60wt% of linoleic acid, preferably at least 70wt%, more preferably at least 80wt%, and preferably the oil comprises less than 10wt% of linolenic acid, preferably less than 5wt%, more preferably less than 1wt%; wherein the vegetable oil preferably is thistle oil or safflower oil.

9. The composition according to any of the preceding claims wherein the emulsifier is casein or a fatty acid based compound preferably based on triglyceride or a polyoxyethylene sorbitan preferably selected from polyoxyethylene sorbitan monooleate, polyoxyethylene sorbitan monolaurate, polyoxyethylene sorbitan monopalmitate, polyoxyethylene sorbitan monostearate, polyoxyethylene sorbitan dioleate and polyoxyethylene sorbitan trioleate.

10. Method of preparing the composition according to any one of claim 1 to 9 wherein the method comprises:

   a. Preparing an emulsifier solution by dissolving the emulsifier in a first aqueous solution at an emulsifier dissolving temperature, with proviso that the pH of the emulsifier solution is at least 8 when the emulsifier is casein,
   b. Preparing a shellack solution by dissolving shellack in a second aqueous solution at a shellack dissolving temperature and at a pH of at least 8; and
   c. Mixing the emulsifier solution with the shellack solution.

11. The method according to claim 10 wherein the emulsifier is casein and wherein the pH of the emulsifier solution and/or the shellac solution is at least 8.2 and preferably adjusted using borax, bicarbonate, sodium hydroxide, ammoniac or ammonium hydroxide ($NH_4OH$).

12. The method according to claim 10 or 11 wherein the emulsifier dissolving temperature is 40-100°C, preferably 80-100°C when the emulsifier is casein or a combination of casein and a fatty acid based compound, or wherein the emulsifier dissolving temperature is lower than 40°C, preferably 20-30°C when the emulsifier is a fatty acid based compound.

13. The method according to any one of claim 10 to 12 wherein the shellack dissolving temperature is 40-100°C, preferably 80-100°C.

14. The method according to any one of claim 10 to 13 wherein an oil is added to the emulsifier solution and wherein an emulsifier selected from a fatty acid based compound and/or a softener is added to the shellac solution; and preferably wherein latex particles are mixed with the schellac solution.

15. The method according to any one of claim 10 to 14 wherein the aqueous solution is purified water preferably selected from deionized water or distilled water.

## EUROPEAN SEARCH REPORT

**Application Number**

EP 24 16 6389

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/106344 A1 (G2O WATER TECH LIMITED [GB]) 6 June 2019 (2019-06-06) <br> * paragraph [0055] - paragraph [0056] * <br> * abstract; claim 49 * | 1-15 | INV. C09D5/00 |
| X | EP 2 873 700 A1 (STERREICHISCHE VIALIT GMBH [AT]) 20 May 2015 (2015-05-20) <br> * paragraph [0013] * <br> * abstract; claim 4 * | 1-15 | |
| X | US 2012/027958 A1 (THAKER JAGDIP [US]) 2 February 2012 (2012-02-02) <br> * paragraph [0012] - paragraph [0016] * <br> * paragraph [0027] - paragraph [0028] * <br> * abstract; claim 3 * | 1-15 | |
| X | JP 2005 338189 A (SEIKO EPSON CORP; NIPPON CATALYTIC CHEM IND) 8 December 2005 (2005-12-08) <br> * paragraph [0058] - paragraph [0060] * <br> * abstract; claims 1-4 * | 1-15 | |
| X | CA 2 998 231 A1 (UNIV GUELPH [CA]) 16 September 2019 (2019-09-16) <br> * paragraph [0014] - paragraph [0016] * <br> * paragraph [0053] - paragraph [0059] * <br> * abstract; claims 8, 9 * | 1-15 | **TECHNICAL FIELDS SEARCHED (IPC)** <br><br> C09D |
| X | US 4 832 865 A (KRIVAK SANDRA L [US] ET AL) 23 May 1989 (1989-05-23) <br> * column 5, line 17 - column 6, line 49 * <br> * abstract; claim 1 * | 1-15 | |

The present search report has been drawn up for all claims

| Place of search | Date of completion of the search | Examiner |
|---|---|---|
| Munich | 5 August 2024 | Glomm, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 6389

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2024

| Patent document cited in search report | Publication date | Patent family member(s) | | Publication date |
|---|---|---|---|---|
| WO 2019106344 A1 | 06-06-2019 | EP | 3717109 A1 | 07-10-2020 |
| | | JP | 2021504135 A | 15-02-2021 |
| | | US | 2020384422 A1 | 10-12-2020 |
| | | WO | 2019106344 A1 | 06-06-2019 |
| EP 2873700 A1 | 20-05-2015 | AT | 515176 A1 | 15-06-2015 |
| | | DK | 2873700 T3 | 13-06-2016 |
| | | EP | 2873700 A1 | 20-05-2015 |
| US 2012027958 A1 | 02-02-2012 | CA | 2806394 A1 | 02-02-2012 |
| | | EP | 2598342 A2 | 05-06-2013 |
| | | US | 2012027958 A1 | 02-02-2012 |
| | | US | 2014287151 A1 | 25-09-2014 |
| | | WO | 2012015480 A2 | 02-02-2012 |
| JP 2005338189 A | 08-12-2005 | CN | 1716072 A | 04-01-2006 |
| | | JP | 4436189 B2 | 24-03-2010 |
| | | JP | 2005338189 A | 08-12-2005 |
| CA 2998231 A1 | 16-09-2019 | NONE | | |
| US 4832865 A | 23-05-1989 | NONE | | |

EPO FORM P0459